# EUROPÄISCHE PATENTSCHRIFT

(11) **EP 3 364 257 B1**
(45) Veröffentlichungstag und Bekanntmachung des Hinweises auf die Patenterteilung: **12.02.2020**
(21) Anmeldenummer: 17157080.7
(22) Anmeldetag: 21.02.2017
(51) Int. Cl.: G05B 19/042

(54) **VERFAHREN ZUM BETRIEB EINES ENGINEERING-SYSTEMS FÜR EIN INDUSTRIELLES PROZESSAUTOMATISIERUNGSSYSTEM UND STEUERUNGSPROGRAMM**
METHOD FOR OPERATING AN ENGINEERING SYSTEM FOR AN INDUSTRIAL PROCESS AUTOMATION SYSTEM AND CONTROL PROGRAM
PROCÉDÉ DE FONCTIONNEMENT D'UN SYSTÈME D'INGÉNIERIE POUR UN SYSTÈME D'AUTOMATISATION DE PROCESSUS INDUSTRIEL ET PROGRAMME DE COMMANDE

(43) Veröffentlichungstag der Anmeldung: 22.08.2018
(73) Patentinhaber: Siemens Aktiengesellschaft, 80333 München (DE)
(72) Erfinder: Walbröl, Stefan, 50389 Wesseling (DE)

(56) Entgegenhaltungen:
- WO-A1-2016/023573
- DE-A1-102012 209 141

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineerung- bzw. Projektierungssystem.

Mittels eines Engineering-Systems können insbesondere Steuerungsprogramme für Automatisierungsgeräte projektiert werden, die zur Visualisierung eines Abbilds einer technischen Anlage oder einer komplexen Maschine und deren Steuerung bzw. Regelung vorgesehen sind. Zur Laufzeit der Steuerungsprogramme bzw. während eines Runtime-Betriebs wird ein technischer Prozess durch Automatisierungsgeräte, wie speicherprogrammierbare Steuerungen, gesteuert bzw. geregelt. Im Rahmen einer Prozessüberwachung während des Runtime-Betriebs kann eine Bedienperson Prozessbilder aufrufen, um einen Überblick über einen aktuellen Anlagenzustand zu erhalten sowie eine Prozessführung bzw. -bedienung wahrzunehmen.

In EP 1 166 215 B1 ist ein Verfahren zur automatischen Wiedergewinnung von Engineering-Daten aus technischen Anlagen beschrieben, bei dem Engineering- und Runtime-Objekte durch ein einheitliches Objektmodell beschrieben werden. Dadurch lässt sich eine direkte Entsprechung zwischen Engineering-Objekten und Runtime-Objekten auf Objektebene festlegen, so dass kein Informationsverlust durch eine Abbildung von Anlagenkomponenten auf das Objektmodell entsteht. Außerdem kann eine direkte Kommunikation zwischen Engineering- und Runtime-Objekten erfolgen.

Aus EP 2 808 749 B1 ist ein Verfahren zum Austausch von Steuerungsinformationen zwischen Bedien- und Beobachtungsgeräten eines industriellen Automatisierungssystems bekannt. Anhand der Steuerungsinformationen wird ein zumindest ausschnittweises Abbild einer mittels Automatisierungsgeräten geregelten oder gesteuerten technischen Anlage an einer graphischen Benutzerschnittstelle eines jeweiligen Bedien- und Beobachtungsgeräts visualisiert. Dem visualisierten Abbild sind Elemente der technischen Anlage repräsentierende computerbasierte Objekte zugeordnet, die durch eine auf einem jeweiligen Bedien- und Beobachtungsgerät eingerichtete Laufzeitumgebung bereitgestellt werden. Sämtliche an unterschiedlichen Bedien- und Beobachtungsgeräten bereitgestellten Objekttypen werden entsprechend einem einheitlichen Adressierungsschema für einen geräteübergreifenden Zugriff verfügbar gemacht.

US 6 063 128 betrifft ein System, das ein Speichergerät, eine erste und zweite Hardware- oder Software-Plattform, ein persistentes portables Datenmodell und computerbasierte Modellbildungssysteme umfasst, die von der ersten und zweiten Plattform abhängig sind. Jede Plattform weist eine Schnittstelle zum Speichergerät auf und stellt systemabhängige Dienste bereit. Der ersten Plattform sind ein erster Betriebssystem-Typ sowie ein erster Computer-Hardware-Typ zugeordnet, während der zweiten Plattform ein zweiter Betriebssystem-Typ sowie ein zweiter Computer-Hardware-Typ zugeordnet sind. Das portable Datenmodell ist im Speichergerät in einem plattformunabhängigen Format gespeichert und umfasst persistente Komponenten-Objekte. Darüber hinaus ist das computerbasierte Modellbildungssystem für die erste Plattform in einem ersten Speicherbereich des Speichergeräts gespeichert, während das computerbasierte Modellbildungssystem für die zweite Plattform in einem zweiten Speicherbereich des Speichergeräts gespeichert ist. Jedes computerbasierte Modellbildungssystem stellt Dienste bereit, um das portable Datenmodell aus dem Speichergerät abzurufen, das Datenmodell durch Hinzufügen und Entfernen von Komponenten-Objekten zu ändern und das Datenmodell persistent im Speichergerät zu speichern. Außerdem umfasst jedes computerbasierte Modellbildungssystem einen statischen Kernel und ein dynamisches Software-Framework. Die Kernel laufen auf der jeweiligen Plattform ab und bilden Schnittstellen zum zugeordneten Betriebssystem und zur entsprechenden Computer-Hardware. Die Software-Frameworks laufen auf der jeweiligen Plattform ab, bilden Schnittstellen zum zugeordneten Kernel und stellen jeweils eine plattformunabhängige graphische Benutzerschnittstelle bereit.

In WO 2010/037145 A2 ist ein Verfahren zum Verwalten einer Prozesssteuerung in einem Computersystem, das zur Konfigurierung und Überwachung einer Prozessanlage vorgesehen ist. Das Computersystem stellt eine interaktive Benutzerschnittstelle zum Verwalten einer Mehrzahl von Objekten in der Prozessanlage bereit. Dabei entspricht jedes Objekt der Mehrzahl von Objekten einer physischen oder logischen Einheit in der Prozessanlage. Außerdem wird ein Navigationsbereich zum Anzeigen eines Satzes von auswählbaren Elementen erstellt. Jedes Element in dem Satz von auswählbaren Elementen entspricht einem jeweiligen Objekt aus der Mehrzahl von Objekten. Des weiteren wird ein Befehlsbereich zum Darstellen eines Satzes von auswählbaren Steuerungselementen erstellt. Jedes Steuerungselement aus dem Satz von auswählbaren Steuerungselementen entspricht einer Aufgabe, die an wenigstens einem Objekt der Mehrzahl von Objekten in der Prozessanlage durchgeführt werden soll. Über den Navigationsbereich wird eine Auswahl eines Elements aus dem Satz von auswählbaren Elementen empfangen, während über den Befehlsbereich eine Auswahl eines Steuerungselements aus dem Satz von auswählbaren Steuerungselementen empfangen wird. Anhand der erhaltenen Auswahl wird ein Betriebskontext bestimmt. Der Betriebskontext entspricht einem Satz von Aktionen, die auf die Auswahl anwendbar sind, wenn die Auswahl eine Elementauswahl ist, oder einem Satz von Elementen, auf welche die Auswahl anwendbar ist, wenn die Auswahl eine Steuerungselementauswahl ist. Der Navigationsbereich oder der Befehlsbereich werden entsprechend dem Betriebskontext angepasst.

Bisherige Engineering-Software-Lösungen (COMOS von Siemens) umfassen als Arbeitsschichten bezeichnete virtuelle Bereiche, die eine Bearbeitung von Engineering-Daten in einer Produktivumgebung ermöglichen, ohne dass Änderungen von Engineering-Daten in einer Arbeitsschicht unmittelbar Änderungen von operativ genutzten Produktivdaten bewirken. Eine Arbeitsschicht umfasst nur tatsächlich geänderte Instanzen bestehender Engineering-Daten, nicht aber eine Kopie sämtlicher Produktivdaten. In einer Arbeitsschicht geänderte Engineering-Daten können im Rahmen einer Freigabe in eine übergeordnete Arbeitsschicht oder in die Produktivdaten übernommen werden. Dabei werden Engineering-Objekte unter Client-seitiger Berücksichtigung hierarchischer Abhängigkeiten separat freigegeben und eine Vielzahl von Aktualisierungsanforderungen an Datenbank-Server übermittelt. Umfassende Freigabe-Vorgänge sind daher sehr zeitaufwendig und rufen hohe Kommunikationsnetzlasten hervor.

Der vorliegenden Erfindung liegt die Aufgabe zugrunde, ein effizientes Verfahren zum Betrieb eines Engineering-Systems für ein industrielles Prozessautomatisierungssystem zu schaffen, das eine erhebliche Beschleunigung von Freigabe-Vorgängen für geänderte Engineering-Daten ermöglicht, und ein Steuerungsprogramm zu dessen Implementierung anzugeben.

Diese Aufgabe wird erfindungsgemäß durch ein Verfahren mit den in Anspruch 1 angegebenen Merkmalen und durch ein Steuerungsprogramm mit den in Anspruch 14 angegebenen Merkmalen gelöst.

Entsprechend dem erfindungsgemäßen Verfahren zum Betrieb eines Engineering-Systems für ein industrielles Prozessautomatisierungssystem werden Komponenten des industriellen Prozessautomatisierungssystems jeweils durch ein computerbasiertes Objekt innerhalb des Engineering-Systems repräsentiert und in zumindest einer Server-seitigen Datenbank des Engineering-Systems persistent gespeichert. Die Objekte werden Server-seitig innerhalb einer hierarchischen Objektstruktur mit mehreren Hierarchieebenen verwaltet. Dabei umfasst die Objektstruktur Abhängigkeiten zwischen Objekten. Durch eine Benutzerselektion vorgegebene Objekte werden für eine Bearbeitung aus der Datenbank in zumindest einen Bearbeitungsspeicherbereich geladen. Dabei ist den Objekten und dem Bearbeitungsspeicherbereich jeweils ein zugriffsberechtigter Benutzer zugeordnet. Objekten bzw. Bearbeitungsspeicherbereichen zugeordnete zugriffsberechtigte Benutzer können beispielsweise Eigentümer des jeweiligen Objekts oder Bearbeitungsspeicherbereichs sein. Ein erster Bearbeitungsspeicherbereich, der als zugriffsberechtigter Benutzer einem zweiten Bearbeitungsspeicherbereich zugeordnet ist, ist hierarchisch vorrangig gegenüber dem zweiten Bearbeitungsspeicherbereich. Ein erstes Objekt in einem vorrangigen Bearbeitungsspeicherbereich, das einen identischen Objektidentifikator wie ein zweites Objekt in einem nachrangigen Bearbeitungsspeicherbereich aufweist, ist Vorgänger des zweiten Objekts.

Erfindungsgemäß wird bei Einleitung einer Client-seitigen Benutzerfreigabe von in einen ausgewählten Bearbeitungsspeicherbereich geladenen freizugebenden Objekten überprüft, ob dem ausgewählten Bearbeitungsspeicherbereich ein direkt vorrangiger Bearbeitungsspeicherbereich zugeordnet ist. Vorzugsweise werden für den ausgewählten Bearbeitungsspeicherbereich bei Einleitung der Client-seitigen Benutzerfreigabe vorrangige Bearbeitungsspeicherbereiche rekursiv ermittelt. Bei einem negativen Überprüfungsergebnis werden die in den ausgewählten Bearbeitungsspeicherbereich geladenen freizugebenden Objekte in die Server-seitige Datenbank zurückgeschrieben. Dagegen werden für in den ausgewählten Bearbeitungsspeicherbereich geladene freigebbare Objekte bei einem positiven Überprüfungsergebnis direkte Vorgänger der freigebbaren Objekte im vorrangigen Bearbeitungsspeicherbereich vorzugsweise rekursiv ermittelt, die übereinstimmende zugriffsberechtigte Benutzer wie die freigebbaren Objekte aufweisen. Die ermittelten Vorgänger werden dann zu den freigebbaren Objekten hinzugefügt. Unter den freigebbaren Objekten werden die freizugebenden Objekte entsprechend Benutzereingabe zur Freigabe gekennzeichnet.

Außerdem werden erfindungsgemäß unter den freigebbaren Objekten zu den freizugebenden Objekten innerhalb der hierarchischen Objektstruktur untergeordnete Objekte ermittelt, vorzugsweise rekursiv, und zur Freigabe gekennzeichnet. Zur Freigabe gekennzeichnete Objekte werden nachfolgend aus dem vorrangigen Benutzerspeicherbereich gelöscht. Die zur Freigabe gekennzeichneten Objekte werden durch Änderung ihrer Zuordnung aus dem ausgewählten Benutzerspeicherbereich in den vorrangigen Benutzerspeicherbereich für einen Abschluss der Client-seitigen Benutzerfreigabe verschoben. Nachfolger durch eine Client-seitige Benutzerfreigabe freigegebener Objekte in nachrangigen Benutzerspeicherbereichen können beispielsweise entsprechend der Client-seitigen Benutzerfreigabe ersetzt werden.

Vorteilhafterweise können insbesondere die zur Freigabe gekennzeichneten Objekte mittels einer einzigen Datenbank-Operation aus dem vorrangigen Benutzerspeicherbereich gelöscht werden. In entsprechender Weise können die zur Freigabe gekennzeichneten Objekte mittels einer einzigen Datenbank-Operation aus dem ausgewählten Benutzerspeicherbereich in den vorrangigen Benutzerspeicherbereich verschoben werden. Somit ist eine Anzahl erforderlicher Datenbank-Operationen für eine Benutzerfreigabe im wesentlichen unabhängig von einer Anzahl freizugebender Objekte. Vielmehr ist die Anzahl der erforderlichen Datenbank-Operationen lediglich von einer Anzahl der Hierarchieebenen abhängig. Client-seitige Zugriffe auf die Server-seitige Datenbank können also auf ein Minimum reduziert werden. Hieraus resultiert neben einer erheblichen Beschleunigung von Freigabe-Vorgängen (Freigabe-Dauer entsprechend praktischen Versuchen um Faktor 50-100 kürzer) eine deutliche Reduktion von Kommunikationsnetzlasten.

Entsprechend einer bevorzugten Ausgestaltung des erfindungsgemäßen Verfahrens werden nur die durch die Benutzerselektion vorgegebenen Objekte für eine Bearbeitung aus der Datenbank in den zumindest einen Bearbeitungsspeicherbereich lesend und schreibend geladen. Außerdem sind im Bearbeitungsspeicherbereich neue Objekte erzeugbar. Darüber hinaus ist Bearbeitungsspeicherbereichen vorzugsweise jeweils eine Ebeneninformation zugeordnet, wobei sich die einem ausgewählten Bearbeitungsspeicherbereich zugeordnete Ebeneninformation von der einem direkt vorrangigen Bearbeitungsspeicherbereich zugeordneten Ebeneninformation um genau eine Stufe unterscheidet. Dementsprechend ist ein erstes Objekt in einem direkt vorrangigen Bearbeitungsspeicherbereich, das einen identischen Objektidentifikator wie ein zweites Objekt in einem nachrangigen Bearbeitungsspeicherbereich und einen übereinstimmenden zugriffsberechtigten Benutzer aufweist, entsprechend einer bevorzugten Ausführungsform der vorliegenden Erfindung direkter Vorgänger des zweiten Objekts.

Entsprechend einer vorteilhaften Ausgestaltung des erfindungsgemäßen Verfahrens werden in einen Bearbeitungsspeicherbereich geladene Objekte an einer Client-seitigen graphischen Benutzerschnittstelle gegenüber in der Datenbank gespeicherten Objekten überlagert dargestellt. Darüber hinaus werden in einen nachrangigen Bearbeitungsspeicherbereich geladene Objekte an der Client-seitigen graphischen Benutzerschnittstelle gegenüber in einen vorrangigen Bearbeitungsspeicherbereich geladenen Objekten vorteilhafterweise überlagert dargestellt. Bearbeitungsspeicherbereiche werden vorzugsweise jeweils Server-seitig für einen Client-seitigen Zugriff verfügbar gemacht.

Das erfindungsgemäße Steuerungsprogramm zum Betrieb eines Engineering-Systems für ein industrielles Prozessautomatisierungssystem ist in einen Arbeitsspeicher eines Rechners ladbar und weist zumindest einen Codeabschnitt auf, bei dessen Ausführung vorangehend erläuterte Schritte durchgeführt werden, wenn das Steuerungsprogramm im Rechner abläuft.

Die vorliegende Erfindung wird nachfolgend an einem Ausführungsbeispiel anhand der Zeichnung näher erläutert. Es zeigt
- Figur 1: einen ersten Teil eines Ablaufdiagramms für ein Verfahren zur Freigabe von in Bearbeitungsspeicherbereichen eines Engineering-Systems bearbeiteten Engineering-Objekten,
- Figur 2: einen zweiten Teil des Ablaufdiagramms gemäß Figur 1,
- Figur 3: eine Strukturdarstellung zur Freigabe genutzter temporärer Tabellen,
- Figur 4: eine schematische Darstellung einer Überlagerung von Bearbeitungsspeicherbereichen an einer graphischen Benutzerschnittstelle.

Durch eine Erstellung von nachfolgend als Arbeitsschichten bezeichneten Bearbeitungsspeicherbereichen eines Engineering-Systems für ein industrielles Prozessautomatisierungssystem können Engineering-Daten und Anlagenobjekte parallel von mehreren Benutzern bearbeitet werden. Innerhalb des Engineering-Systems werden Komponenten des industriellen Prozessautomatisierungssystems jeweils durch ein Engineering-Objekt als computerbasiertes Objekt repräsentiert und in zumindest einer Server-seitigen Datenbank des Engineering-Systems persistent gespeichert. Die Engineering-Objekte werden Server-seitig innerhalb einer hierarchischen Objektstruktur mit mehreren Hierarchieebenen verwaltet. Dabei umfasst die Objektstruktur Abhängigkeiten zwischen Objekten.

Bei einer Bearbeitung von Engineering-Objekten in Arbeitsschichten bleibt eine originäre Datenbasis einer technischen Anlage bis auf weiteres unverändert. Erst nach Bearbeitung werden vorgenommene Änderungen der Engineering-Objekte im Rahmen eines Freigabe-Prozesses mit der originären Datenbasis konsolidiert und in einen operativ genutzten Produktivdatenbestand der Anlage freigegeben.

Durch eine Benutzerselektion vorgegebene Engineering-Objekte werden für eine Bearbeitung aus der Server-seitigen Datenbank des Engineering-Systems lesend und schreibend in zumindest eine Arbeitsschicht geladen. Dabei ist den Engineering-Objekten und der Arbeitsschicht jeweils genau ein zugriffsberechtigter Benutzer bzw. Eigentümer zugeordnet. Zusätzlich zu den aus der Datenbank geladenen Engineering-Objekten sind in einer Arbeitsschicht neue Engineering-Objekte erzeugbar.

Arbeitsschichten können hierarchische Abhängigkeiten zu anderen Arbeitsschichten aufweisen. Eine erste Arbeitsschicht, die als Eigentümer einer zweiten Arbeitsschicht zugeordnet ist, ist dabei hierarchisch vorrangig gegenüber der zweiten Arbeitsschicht. Dementsprechend ist ein erstes Engineering-Objekt in einer vorrangigen Arbeitsschicht, das einen identischen Objektidentifikator wie ein zweites Engineering-Objekt in einer nachrangigen Arbeitsschicht aufweist, Vorgänger des zweiten Engineering-Objekts. Im vorliegenden Ausführungsbeispiel ist den Arbeitsschichten jeweils eine Ebeneninformation zugeordnet. Die einer ausgewählten Arbeitsschicht zugeordnete Ebeneninformation unterscheidet sich von der einer direkt vorrangigen Arbeitsschicht zugeordneten Ebeneninformation um genau eine Stufe. Ein erstes Engineering-Objekt in einer direkt vorrangigen Arbeitsschicht, das einen identischen Objektidentifikator wie ein zweites Engineering-Objekt in einer nachrangigen Arbeitsschicht und denselben Eigentümer aufweist, ist direkter Vorgänger des zweiten Engineering-Objekts.

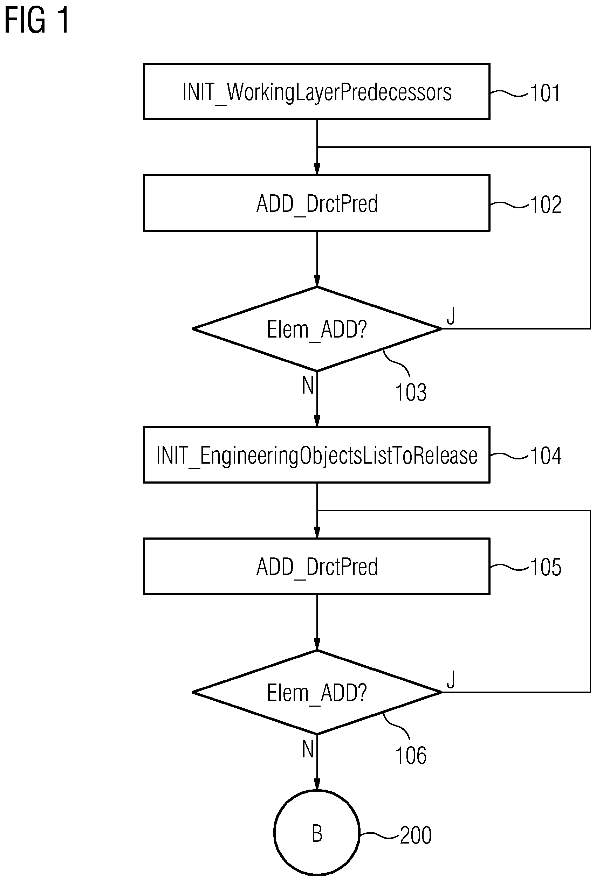

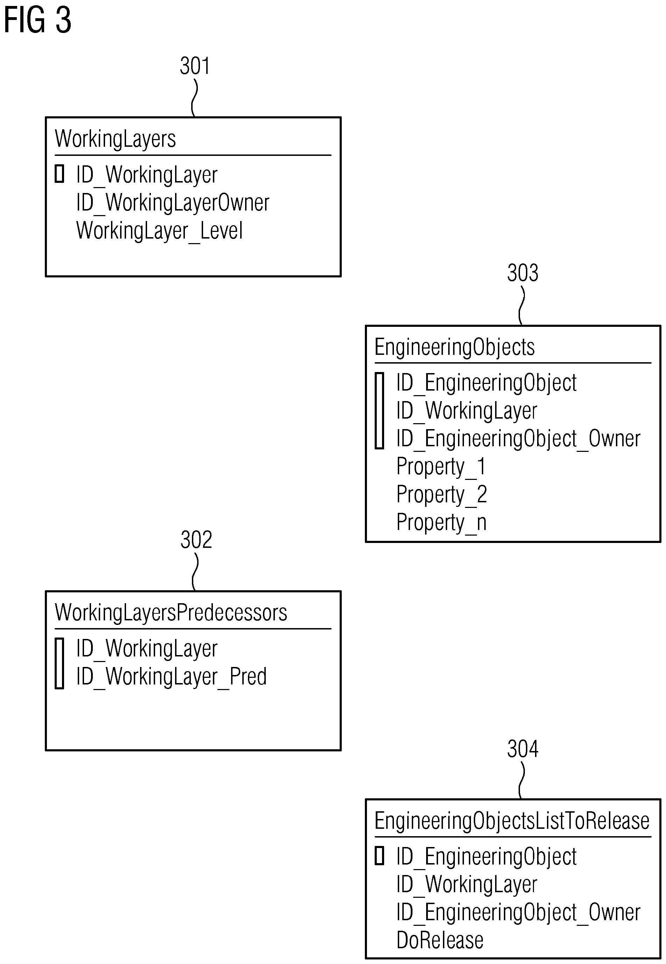

Bei Client-seitiger Einleitung eines Freigabe-Prozesses von in eine ausgewählte Arbeitsschicht geladenen freizugebenden Engineering-Objekten wird entsprechend Schritt 101 des in Figur 1 dargestellten Ablaufdiagramms zur Ermittlung vorrangiger Arbeitsschichten eine Tabelle WorkingLayerPredecessors initialisiert, die Zuordnungen zwischen Arbeitsschicht-Identifikatoren von Arbeitsschichten und Arbeitsschicht-Identifikatoren vorrangiger Arbeitsschichten umfasst. In Figur 3 ist die Tabelle WorkingLayerPredecessors 302 mit ihren Attributen ID_WorkingLayer für die Arbeitsschicht-Identifikatoren und ID_WorkingLayer_Pred für die Arbeitsschicht-Identifikatoren vorrangiger Arbeitsschichten dargestellt. Dabei bilden beide Attribute ID_WorkingLayer und ID_WorkingLayer_Pred zusammen einen Primärschlüssel für die Tabelle WorkingLayerPredecessors 302.

Die Tabelle WorkingLayerPredecessors 302 wird mit Informationen aus einer Tabelle WorkingLayers 301 initialisiert, die Zuordnungen zwischen Arbeitsschicht-Identifikatoren und Eigentümer-Identifikatoren für Eigentümer der jeweiligen Arbeitsschicht umfasst. Hierzu weist die Tabelle WorkingLayers 301 als Attribute ID_WorkingLayer für die Arbeitsschicht-Identifikatoren und ID_WorkingLayerOwner für die Eigentümer-Identifikatoren auf. Zusätzlich umfasst die Tabelle WorkingLayers 301 als Attribut WorkingLayer_Level für Ebeneninformationen, die den Arbeitsschichten zugeordnet sind. Das Attribut ID_WorkingLayer bildet einen Primärschlüssel für die Tabelle WorkingLayers 301.

Zunächst wird die Tabelle WorkingLayerPredecessors 302 mit Informationen über direkte Arbeitsschicht-Eigentümer aus der Tabelle WorkingLayers 301 befüllt. Hierbei kann es vorkommen, dass als Arbeitsschicht-Eigentümer zunächst andere Arbeitsschichten ermittelt werden, jedoch keine Benutzer im eigentlichen Sinn. Eine Initialisierung der Tabelle WorkingLayerPredecessors 302 kann beispielsweise mittels nachstehenden SQL-Statements realisiert werden.

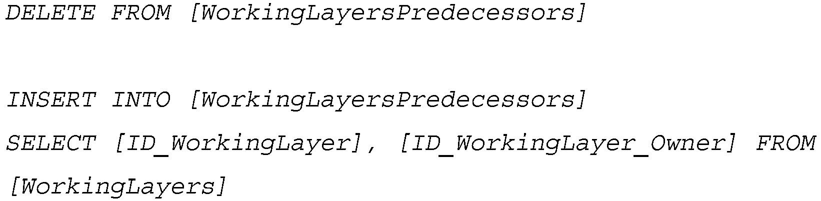

Entsprechend Schritt 102 und 103 wird die Tabelle WorkingLayerPredecessors 302 solange rekursiv befüllt, bis sämtliche vorrangigen Arbeitsschichten ermittelt sind, so dass hieraus vollständige Eigentümerketten ableitbar sind. Eine derartige rekursive Befüllung der Tabelle WorkingLayerPredecessors 302 kann beispielsweise mittels nachstehenden SQL-Statements realisiert werden.

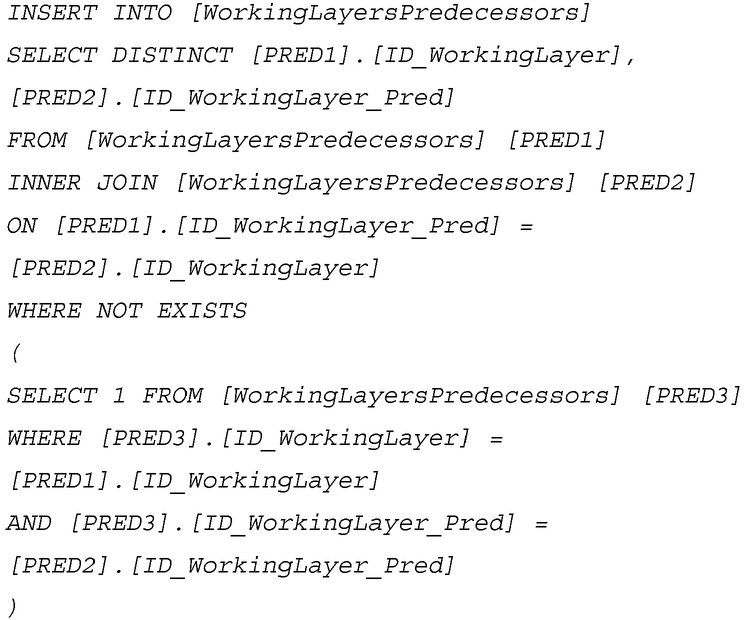

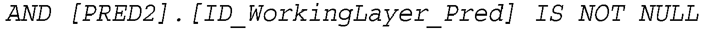

Somit kann bei Client-seitiger Einleitung eines Freigabe-Prozesses von in eine ausgewählte Arbeitsschicht geladenen freizugebenden Engineering-Objekten überprüft werden, ob der ausgewählten Arbeitsschicht eine direkt vorrangige Arbeitsschicht zugeordnet ist. Bei einem negativen Überprüfungsergebnis, wenn also keine direkt vorrangige Arbeitsschicht vorhanden ist, werden die in die ausgewählte Arbeitsschicht geladenen freizugebenden Objekte in die Server-seitige Datenbank zurückgeschrieben. Dagegen werden für in die ausgewählte Arbeitsschicht geladene freigebbare Engineering-Objekte bei einem positiven Überprüfungsergebnis direkte Vorgänger der freigebbaren Engineering-Objekte in der vorrangigen Arbeitsschicht ermittelt, die denselben Eigentümer wie die freigebbaren Engineering-Objekte aufweisen. Entsprechend Schritt 104 des in Figur 1 dargestellten Ablaufdiagramms wird hierfür zunächst eine Tabelle EngineeringObjectsListToRelease initialisiert, die sämtliche freigebbaren Engineering-Objekte der ausgewählten Arbeitsschicht sowie eine vollständige Eigentümerkette der freigebbaren Engineering-Objekte aus Sicht der ausgewählten Arbeitsschicht umfasst. Diese Tabelle umfasst insbesondere Zuordnungen zwischen Engineering-Objekt-Identifikatoren, Arbeitsschicht-Identifikatoren und Eigentümer-Identifikatoren, die dem jeweiligen freigebbaren Engineering-Objekt zugeordnet sind.

Entsprechend Figur 3 weist die Tabelle EngineeringObjectsListToRelease 304 als Attribute ID_EngineeringObject für die Engineering-Objekt-Identifikatoren, ID_WorkingLayer für die Arbeitsschicht-Identifikatoren und ID_EngineeringObject_Owner für die Eigentümer-Identifikatoren auf. Zusätzlich umfasst die Tabelle EngineeringObjectsListToRelease 304 als Attribut DoRelease zur Kennzeichnung für eine Freigabe vorgesehener Engineering-Objekte. Das Attribut ID_EngineeringObject bildet einen Primärschlüssel für die Tabelle EngineeringObjectsListToRelease 304.

Die Tabelle EngineeringObjectsListToRelease 304 wird zunächst mit allen Referenzen auf Instanzen der Engineering-Objekte der ausgewählten Arbeitsschicht initialisiert, deren Identifikator im vorliegenden Ausführungsbeispiel @ID_WorkingLayer-ToRelease ist. Die Instanzen der Engineering-Objekte werden in einer Tabelle EngineeringObjects 303 verwaltet, die als Attribute ID_EngineeringObject für die Engineering-Objekt-Identifikatoren, ID_WorkingLayer für die Arbeitsschicht-Identifikatoren und ID_EngineeringObject_Owner für die Eigentümer-Identifikatoren der Engineering-Objekte umfasst. Zusätzlich umfasst die Tabelle EngineeringObjects 303 ein oder mehrere Attribute Property_1, Property_2, ..., Property_n zur Festlegung spezifischer Eigenschaften des jeweiligen Engineering-Objekts. Eine Initialisierung der Tabelle EngineeringObjectsListToRelease 304 kann beispielsweise mittels nachstehenden SQL-Statements realisiert werden.

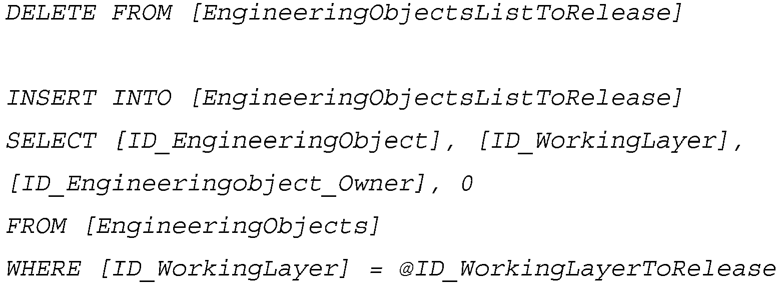

Entsprechend Schritt 105 und 106 wird die Tabelle EngineeringObjectsListToRelease 304 solange rekursiv befüllt, bis sämtliche Vorgänger für die in die ausgewählte Arbeitsschicht geladenen freigebbaren Engineering-Objekte ermittelt sind. Hierzu werden zu den originär freigebbaren Engineering-Objekten sowie zu den diesen Engineering-Objekten zugeordneten Eigentümern Instanzen weiterer Engineering-Objekte in der Eigentümerkette ermittelt und in die Tabelle EngineeringObjectsListToRelease 304 eingetragen. Unter Zuhilfenahme der Tabelle WorkingLayersPredecessors 302 werden zunächst alle Instanzen ausgeschlossen, die nicht einer Arbeitsschicht in der Eigentümerkette der ausgewählten Arbeitsschicht zugeordnet werden können. Von den verbleibenden Instanzen wird mit Hilfe der Tabelle WorkingLayers 301 die Instanz bestimmt, die der ausgewählten Arbeitsschicht am nächsten bzw. darin enthalten ist. Grundsätzlich ist dies jeweils die Instanz mit größtem Wert der zugeordneten Ebeneninformation, die durch das Attribut WorkingLayer_Level in der Tabelle WorkingLayers 301 abgebildet wird. Abschließend wird die auf diese Weise identifizierte Instanz zur Liste der freigebbaren Enginering-Objekte hinzugefügt. Eine rekursive Befüllung der Tabelle EngineeringObjectsListToRelease 304 kann beispielsweise mittels nachstehenden komplexen SQL-Statements realisiert werden.

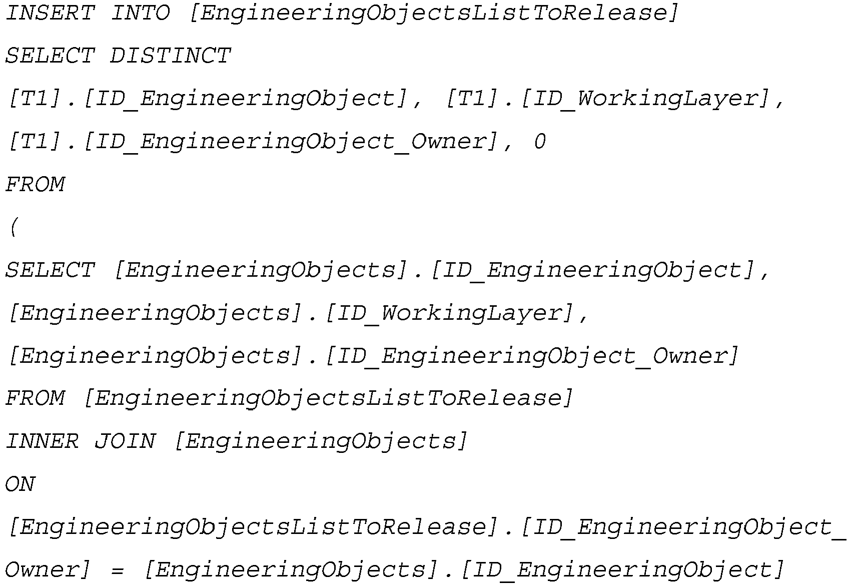

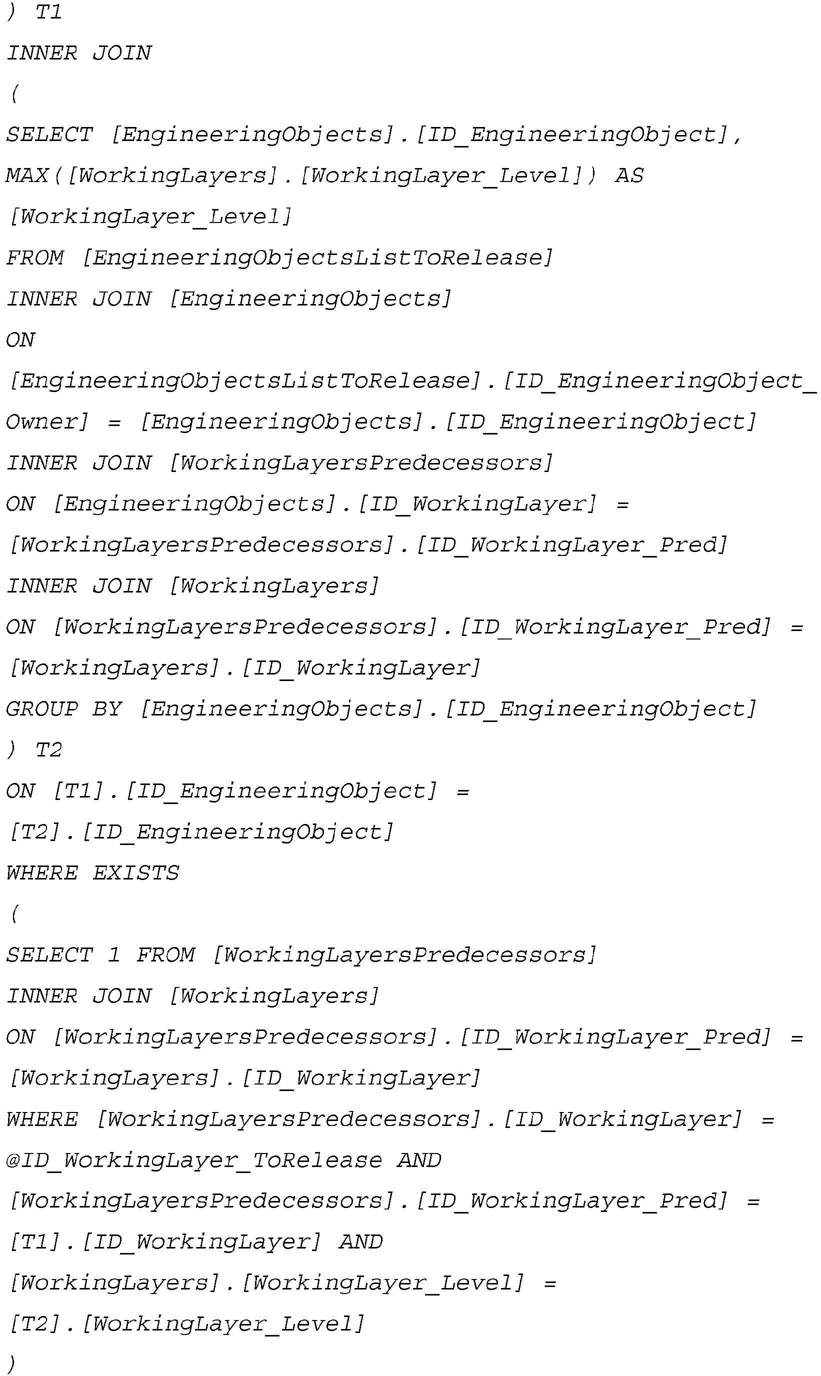

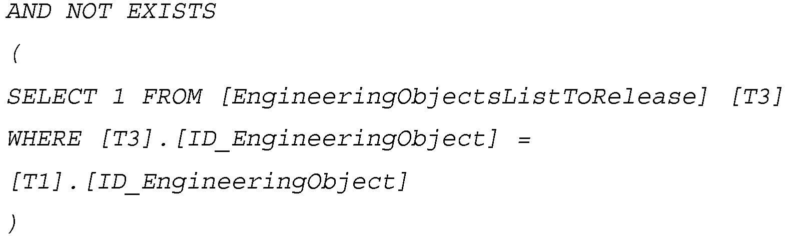

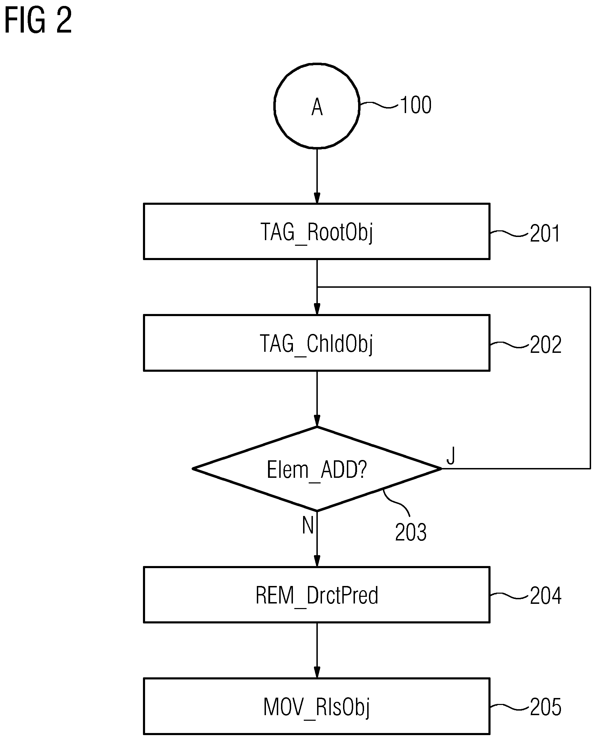

Nach rekursiver Befüllung der Tabelle EngineeringObjectsListToRelease 304 entsprechend Schritt 105 und 106 erfolgt mit Schritt 200 und Schritt 100 ein Übergang vom in Figur 1 dargestellten ersten Teil des Ablaufdiagramms zum in Figur 2 dargestellten zweiten Teil des Ablaufdiagramms. Entsprechend Schritt 201 werden in der Tabelle EngineeringObjectsListToRelease 304 zunächst unter den freigebbaren Engineering-Objekten die freizugebenden Engineering-Objekte entsprechend Benutzereingabe zur Freigabe gekennzeichnet. Auf diese Weise werden Wurzeln sämtlicher Teilbäume definiert, die Gegenstand einer Arbeitsschichtenfreigabe sein sollen. Die Wurzeln der Teilbäume werden im vorliegenden Ausführungsbeispiel durch @ID_RootObject_1, @ID_RootObject_2, ..., @ID_RootObject_n identifiziert. Eine Definition der Teilbäume, die Gegenstand einer Arbeitsschichtenfreigabe sein sollen, kann beispielsweise mittels nachstehenden SQL-Statements realisiert werden.

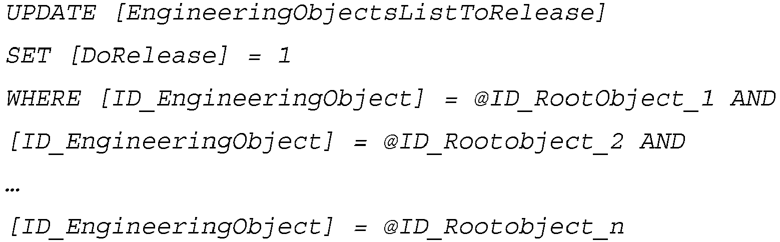

Anschließend werden entsprechend Schritt 202 und 203 unter den freigebbaren Engineering-Objekten zu den freizugebenden Engineering-Objekten innerhalb der hierarchischen Objektstruktur rekursiv untergeordnete Engineering-Objekte ermittelt und in der der Tabelle EngineeringObjectsListToRelease 304 zur Freigabe gekennzeichnet. Dies kann beispielsweise mittels nachstehenden SQL-Statements realisiert werden.

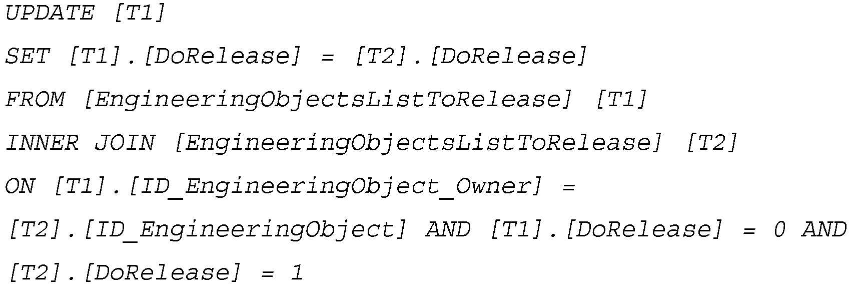

Nachfolgend werden entsprechend Schritt 204 zur Freigabe gekennzeichnete Engineering-Objekte aus der direkt vorrangigen Arbeitsschicht gelöscht, damit diese später durch die freigegebenen Engineering-Objekte aus der ausgewählten Arbeitsschicht ersetzt werden können. Dies kann beispielsweise mittels nachstehenden SQL-Statements realisiert werden.

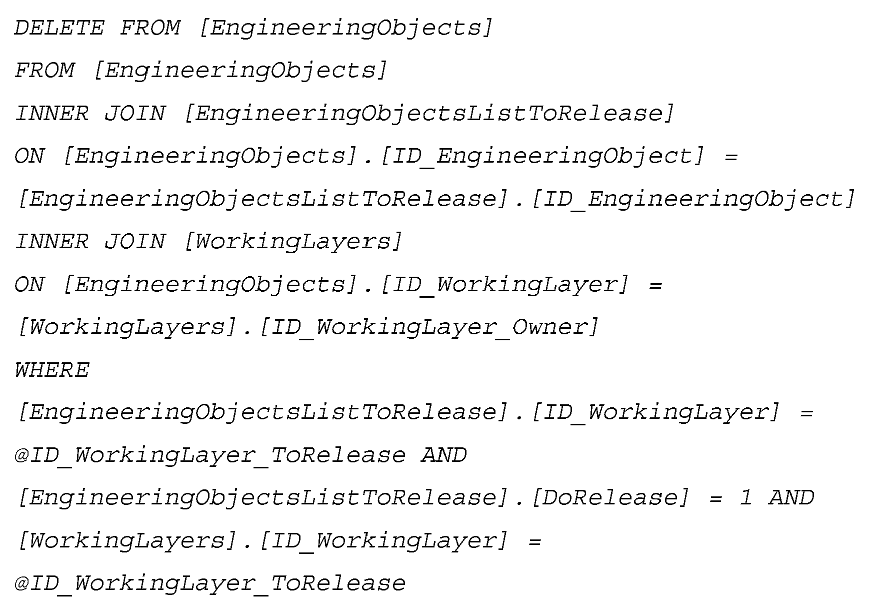

Abschließend werden die zur Freigabe gekennzeichneten Engineering-Objekte entsprechend Schritt 205 durch Änderung ihrer Zuordnung aus der ausgewählten Arbeitsschicht in die direkt vorrangige Arbeitsschicht für einen Abschluss des Freigabe-Prozesses verschoben. Dies kann beispielsweise mittels nachstehenden SQL-Statements realisiert werden.

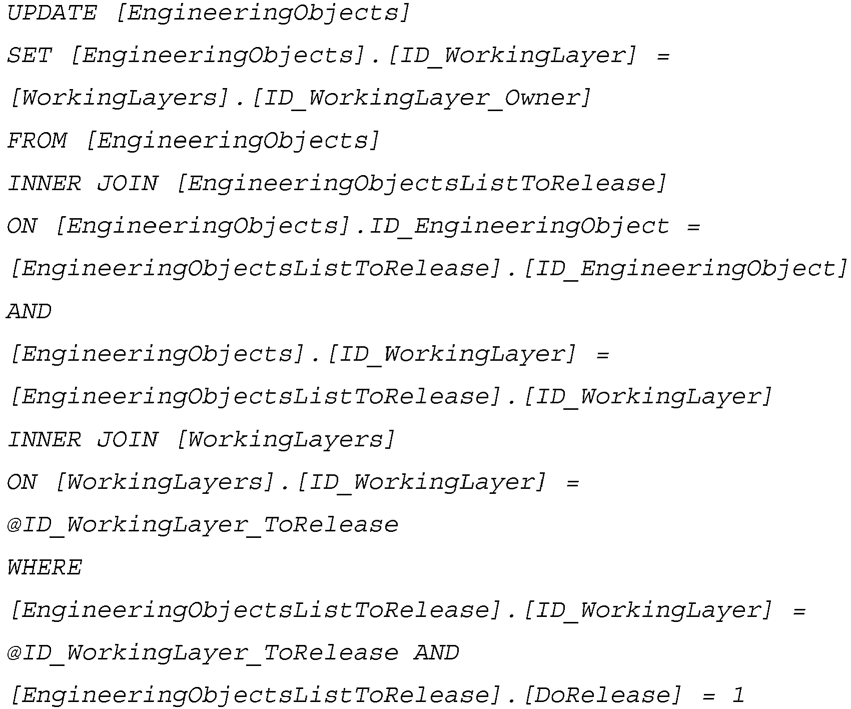

Die zur Freigabe gekennzeichneten Engineering-Objekte werden entsprechend dem vorliegenden Ausführungsbeispiel also mittels einer einzigen Datenbank-Operation aus der direkt vorrangigen Arbeitsschicht gelöscht und mittels einer einzigen Datenbank-Operation aus der ausgewählten Arbeitsschicht in die direkt vorrangige Arbeitsschicht verschoben. Vorzugsweise werden Nachfolger der freigegebenen Engineering-Objekte in nachrangigen Arbeitsschichten im Rahmen eines Freigabe-Prozesses entsprechend den freigegebenen Engineering-Objekten ersetzt.

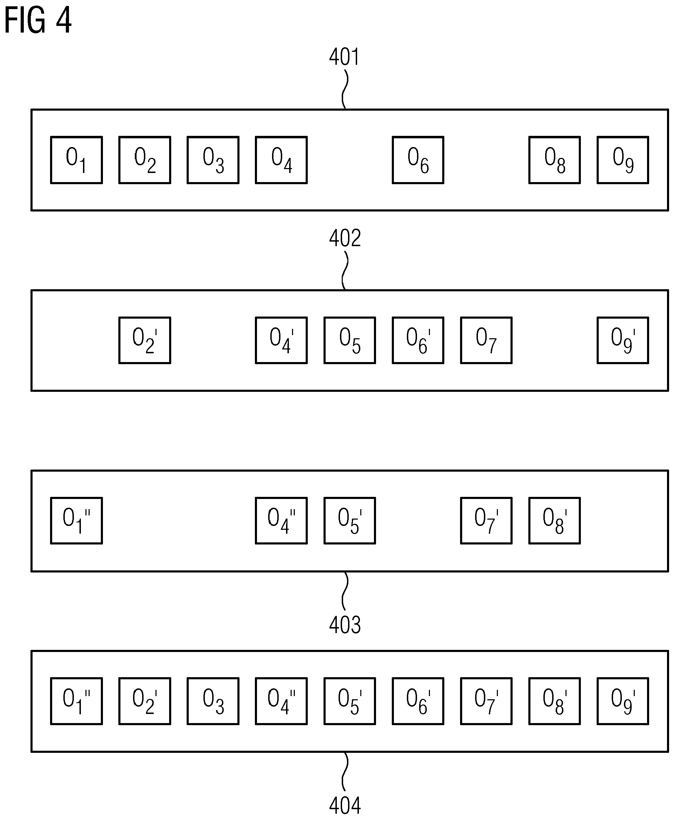

Entsprechend der in Figur 4 schematisch dargestellten Überlagerung von Arbeitsschichten 402, 403 an einer graphischen Benutzerschnittstelle 404 werden in eine ausgewählte Arbeitsschicht 403 geladene Engineering-Objekte O₁", O₄", O₅', O₇', O₈' einerseits gegenüber dem in der Server-seitigen Datenbank gespeicherten Produktivdatenbestand O₁-O₄, O₆, O₈-O₉ überlagert dargestellt. Andererseits werden diese Engineering-Objekte O₁", O₄", O₅', O₇', O₈' gegenüber in eine vorrangige Arbeitsschicht 402 geladenen Engineering-Objekten O₂', O₄', O₅, O₆', O₇, O₉' überlagert dargestellt. An der graphischen Benutzerschnittstelle 404 sind entsprechend dem in Figur 4 dargestellten Beispiel resultierend die Engineering-Objekte O₁", O₂', O₃, O₄", O₅', O₆', O₇', O₈', O₉' sichtbar.

## Patentansprüche

1. Verfahren zum Betrieb eines Engineering-Systems für ein industrielles Prozessautomatisierungssystem, bei dem
- Komponenten des industriellen Prozessautomatisierungssystems jeweils durch ein computerbasiertes Objekt innerhalb des Engineering-Systems repräsentiert und in zumindest einer Server-seitigen Datenbank (401) des Engineering-Systems persistent gespeichert werden,
- die Objekte Server-seitig innerhalb einer hierarchischen Objektstruktur mit mehreren Hierarchieebenen verwaltet werden, wobei die Objektstruktur Abhängigkeiten zwischen Objekten umfasst,
- durch eine Benutzerselektion vorgegebene Objekte für eine Bearbeitung aus der Datenbank (401) in zumindest einen Bearbeitungsspeicherbereich (402, 403) geladen werden, wobei den Objekten und dem Bearbeitungsspeicherbereich jeweils ein zugriffsberechtigter Benutzer zugeordnet ist,
- ein erster Bearbeitungsspeicherbereich (402), der als zugriffsberechtigter Benutzer einem zweiten Bearbeitungsspeicherbereich (403) zugeordnet ist, hierarchisch vorrangig gegenüber dem zweiten Bearbeitungsspeicherbereich (403) ist,
- ein erstes Objekt (O₄', O₅, O₇) in einem vorrangigen Bearbeitungsspeicherbereich (402), das einen identischen Objektidentifikator wie ein zweites Objekt (O₄", O₅', O₇') in einem nachrangigen Bearbeitungsspeicherbereich (403) aufweist, Vorgänger des zweiten Objekts ist,
- bei Einleitung einer Client-seitigen Benutzerfreigabe von in einen ausgewählten Bearbeitungsspeicherbereich (403) geladenen freizugebenden Objekten überprüft wird, ob dem ausgewählten Bearbeitungsspeicherbereich (403) ein direkt vorrangiger Bearbeitungsspeicherbereich (402) zugeordnet ist,
- die in den ausgewählten Bearbeitungsspeicherbereich geladenen freizugebenden Objekte bei einem negativen Überprüfungsergebnis in die Server-seitige Datenbank (401) zurückgeschrieben werden,
- für in den ausgewählten Bearbeitungsspeicherbereich geladene freigebbare Objekte bei einem positiven Überprüfungsergebnis direkte Vorgänger der freigebbaren Objekte im vorrangigen Bearbeitungsspeicherbereich ermittelt werden (105-106), die übereinstimmende zugriffsberechtigte Benutzer wie die freigebbaren Objekte aufweisen,
- die ermittelten Vorgänger zu den freigebbaren Objekten hinzugefügt werden,
- unter den freigebbaren Objekten die freizugebenden Objekte entsprechend Benutzereingabe zur Freigabe gekennzeichnet werden (201),
- unter den freigebbaren Objekten zu den freizugebenden Objekten innerhalb der hierarchischen Objektstruktur untergeordnete Objekte ermittelt und zur Freigabe gekennzeichnet werden (202-203),
- zur Freigabe gekennzeichnete Objekte aus dem vorrangigen Benutzerspeicherbereich gelöscht werden (204),
- die zur Freigabe gekennzeichneten Objekte durch Änderung ihrer Zuordnung aus dem ausgewählten Benutzerspeicherbereich in den vorrangigen Benutzerspeicherbereich für einen Abschluss der Client-seitigen Benutzerfreigabe verschoben werden (205).

2. Verfahren nach Anspruch 1,
bei dem nur die durch die Benutzerselektion vorgegebenen Objekte für eine Bearbeitung aus der Datenbank in den zumindest einen Bearbeitungsspeicherbereich lesend und schreibend geladen werden und bei dem im Bearbeitungsspeicherbereich neue Objekte erzeugbar sind.

3. Verfahren nach einem der Ansprüche 1 oder 2,
bei dem Bearbeitungsspeicherbereichen jeweils eine Ebeneninformation zugeordnet ist und bei dem sich die einem ausgewählten Bearbeitungsspeicherbereich zugeordnete Ebeneninformation von der einem direkt vorrangigen Bearbeitungsspeicherbereich zugeordneten Ebeneninformation um eine Stufe unterscheidet.

4. Verfahren nach Anspruch 3,
bei dem ein erstes Objekt in einem direkt vorrangigen Bearbeitungsspeicherbereich, das einen identischen Objektidentifikator wie ein zweites Objekt in einem nachrangigen Bearbeitungsspeicherbereich und einen übereinstimmenden zugriffsberechtigten Benutzer aufweist, direkter Vorgänger des zweiten Objekts ist.

5. Verfahren nach einem der Ansprüche 1 bis 4,
bei dem Objekten und/oder Bearbeitungsspeicherbereichen zugeordnete zugriffsberechtigte Benutzer Eigentümer des jeweiligen Objekts oder Bearbeitungsspeicherbereichs sind.

6. Verfahren nach einem der Ansprüche 1 bis 5,
bei dem in einen Bearbeitungsspeicherbereich geladene Objekte an einer Client-seitigen graphischen Benutzerschnittstelle gegenüber in der Datenbank gespeicherten Objekten überlagert dargestellt werden.

7. Verfahren nach Anspruch 6,
bei dem in einen nachrangigen Bearbeitungsspeicherbereich geladene Objekte an der Client-seitigen graphischen Benutzerschnittstelle gegenüber in einen vorrangigen Bearbeitungsspeicherbereich geladenen Objekten überlagert dargestellt werden.

8. Verfahren nach einem der Ansprüche 6 oder 7,
bei dem Bearbeitungsspeicherbereiche jeweils Server-seitig für einen Client-seitigen Zugriff verfügbar gemacht werden.

9. Verfahren nach einem der Ansprüche 1 bis 8,
bei dem für den ausgewählten Bearbeitungsspeicherbereich bei Einleitung der Client-seitigen Benutzerfreigabe vorrangige Bearbeitungsspeicherbereiche rekursiv ermittelt werden.

10. Verfahren nach einem der Ansprüche 1 bis 9,
bei dem die Vorgänger für die in den ausgewählten Bearbeitungsspeicherbereich geladenen freigebbaren Objekte rekursiv ermittelt werden.

11. Verfahren nach einem der Ansprüche 1 bis 10,
bei dem die zu den freizugebenden Objekten innerhalb der hierarchischen Objektstruktur untergeordneten Objekte rekursiv ermittelt werden.

12. Verfahren nach einem der Ansprüche 9 bis 11,
bei dem die zur Freigabe gekennzeichneten Objekte mittels einer einzigen Datenbank-Operation aus dem vorrangigen Benutzerspeicherbereich gelöscht werden und bei dem die zur Freigabe gekennzeichneten Objekte mittels einer einzigen Datenbank-Operation aus dem ausgewählten Benutzerspeicherbereich in den vorrangigen Benutzerspeicherbereich verschoben werden.

13. Verfahren nach einem der Ansprüche 1 bis 12,
bei dem Nachfolger durch eine Client-seitige Benutzerfreigabe freigegebener Objekte in nachrangigen Benutzerspeicherbereichen entsprechend der Client-seitigen Benutzerfreigabe ersetzt werden.

14. Steuerungsprogramm zum Betrieb eines Engineering-Systems für ein industrielles Prozessautomatisierungssystem, wobei das Steuerungsprogramm in einen Arbeitsspeicher eines Rechners ladbar ist und zumindest einen Codeabschnitt aufweist, bei dessen Ausführung
- Komponenten des industriellen Prozessautomatisierungssystems jeweils durch ein computerbasiertes Objekt innerhalb des Engineering-Systems repräsentiert und in zumindest einer Server-seitigen Datenbank des Engineering-Systems persistent gespeichert werden,
- die Objekte Server-seitig innerhalb einer hierarchischen Objektstruktur mit mehreren Hierarchieebenen verwaltet werden, wobei die Objektstruktur Abhängigkeiten zwischen Objekten umfasst,
- durch eine Benutzerselektion vorgegebene Objekte für eine Bearbeitung aus der Datenbank in zumindest einen Bearbeitungsspeicherbereich geladen werden, wobei den Objekten und dem Bearbeitungsspeicherbereich jeweils ein zugriffsberechtigter Benutzer zugeordnet ist,
- ein erster Bearbeitungsspeicherbereich, der als zugriffsberechtigter Benutzer einem zweiten Bearbeitungsspeicherbereich zugeordnet ist, hierarchisch vorrangig gegenüber dem zweiten Bearbeitungsspeicherbereich ist,
- ein erstes Objekt in einem vorrangigen Bearbeitungsspeicherbereich, das einen identischen Objektidentifikator wie ein zweites Objekt in einem nachrangigen Bearbeitungsspeicherbereich aufweist, Vorgänger des zweiten Objekts ist,
- bei Einleitung einer Client-seitigen Benutzerfreigabe von in einen ausgewählten Bearbeitungsspeicherbereich geladenen freizugebenden Objekten überprüft wird, ob dem ausgewählten Bearbeitungsspeicherbereich ein direkt vorrangiger Bearbeitungsspeicherbereich zugeordnet ist,
- die in den ausgewählten Bearbeitungsspeicherbereich geladenen freizugebenden Objekte bei einem negativen Überprüfungsergebnis in die Server-seitige Datenbank zurückgeschrieben werden,
- für in den ausgewählten Bearbeitungsspeicherbereich geladene freigebbare Objekte bei einem positiven Überprüfungsergebnis direkte Vorgänger der freigebbaren Objekte im vorrangigen Bearbeitungsspeicherbereich ermittelt werden, die übereinstimmende zugriffsberechtigte Benutzer wie die freigebbaren Objekte aufweisen,
- die ermittelten Vorgänger zu den freigebbaren Objekten hinzugefügt werden,
- unter den freigebbaren Objekten die freizugebenden Objekte entsprechend Benutzereingabe zur Freigabe gekennzeichnet werden,
- unter den freigebbaren Objekten zu den freizugebenden Objekten innerhalb der hierarchischen Objektstruktur untergeordnete Objekte ermittelt und zur Freigabe gekennzeichnet werden,
- zur Freigabe gekennzeichnete Objekte aus dem vorrangigen Benutzerspeicherbereich gelöscht werden,
- die zur Freigabe gekennzeichneten Objekte durch Änderung ihrer Zuordnung aus dem ausgewählten Benutzerspeicherbereich in den vorrangigen Benutzerspeicherbereich für einen Abschluss der Client-seitigen Benutzerfreigabe verschoben werden,
wenn das Steuerungsprogramm im Rechner abläuft.

## Claims

1. Method for operating an engineering system for an industrial process automation system, wherein
- components of the industrial process automation system are in each case represented by a computer-based object within the engineering system and stored in a persistent fashion in at least one server-side database (401) of the engineering system,
- the objects are managed on the server side within a hierarchical object structure with a plurality of hierarchical levels, wherein the object structure comprises dependencies between objects,
- objects predefined by a user selection are loaded for a processing from the database (401) into at least one processing memory area (402, 403), wherein a respective access-authorized user is assigned to the objects and to the processing memory area,
- a first processing memory area (402), which is assigned as access-authorized user to a second processing memory area (403), is hierarchically of higher priority with respect to the second processing memory area (403),
- a first object (O₄', O₅, O₇) in a processing memory area (402) of higher priority, said first object having an identical object identifier to a second object (O₄", O₅', O₇') in a processing memory area (403) of lower priority, is a predecessor of the second object,
- upon initiation of a client-side user release of objects to be released that have been loaded into a selected processing memory area (403), a check is made to establish whether a processing memory area (402) that is directly of higher priority is assigned to the selected processing memory area (403),
- the objects to be released that have been loaded into the selected processing memory area are written back to the server-side database (401) in the event of a negative result of the check,
- for releasable objects that have been loaded into the selected processing memory area, in the event of a positive result of the check, direct predecessors of the releasable objects in the processing memory area of higher priority are determined (105-106), which have access-authorized users corresponding to those of the releasable objects,
- the determined predecessors are added to the releasable objects,
- among the releasable objects, the objects to be released are tagged for release in accordance with user input (201),
- among the releasable objects, objects subordinate to the objects to be released within the hierarchical object structure are determined and tagged for release (202-203),
- objects tagged for release are deleted from the user memory area of higher priority (204),
- the objects tagged for release, by means of a change of their assignment, are shifted from the selected user memory area into the user memory area of higher priority for a conclusion of the client-side user release (205).

2. Method according to Claim 1,
wherein only the objects predefined by the user selection are loaded in reading and writing fashion for a processing from the database into the at least one processing memory area, and wherein new objects are generatable in the processing memory area.

3. Method according to either of Claims 1 and 2,
wherein respective level information is assigned to processing memory areas, and wherein the level information assigned to a selected processing memory area differs from the level information assigned to a processing memory area directly of higher priority by one step.

4. Method according to Claim 3,
wherein a first object in a processing memory area directly of higher priority, said first object having an identical object identifier to a second object in a processing memory area of lower priority and a corresponding access-authorized user, is a direct predecessor of the second object.

5. Method according to any of Claims 1 to 4,
wherein access-authorized users assigned to objects and/or processing memory areas are owners of the respective object or processing memory area.

6. Method according to any of Claims 1 to 5,
wherein objects that have been loaded into a processing memory area are represented on a client-side graphical user interface in a superimposed manner with respect to objects stored in the database.

7. Method according to Claim 6,
wherein objects that have been loaded into a processing memory area of lower priority are represented on the client-side graphical user interface in a superimposed manner with respect to objects that have been loaded into a processing memory area of higher priority.

8. Method according to either of Claims 6 and 7,
wherein processing memory areas are made available for a client-side access in each case on the server side.

9. Method according to any of Claims 1 to 8,
wherein for the selected processing memory area, upon initiation of the client-side user release, processing memory areas of higher priority are determined recursively.

10. Method according to any of Claims 1 to 9,
wherein the predecessors for the releasable objects that have been loaded into the selected processing memory area are determined recursively.

11. Method according to any of Claims 1 to 10,
wherein the objects subordinate to the objects to be released within the hierarchical object structure are determined recursively.

12. Method according to any of Claims 9 to 11,
wherein the objects tagged for release are deleted from the user memory area of higher priority by means of a single database operation, and wherein the objects tagged for release are shifted from the selected user memory area into the user memory area of higher priority by means of a single database operation.

13. Method according to any of Claims 1 to 12,
wherein successors of objects released by a client-side user release in user memory areas of lower priority are replaced in accordance with the client-side user release.

14. Control program for operating an engineering system for an industrial process automation system, wherein the control program is loadable into a main memory of a computer and comprises at least one code section upon whose execution
- components of the industrial process automation system are in each case represented by a computer-based object within the engineering system and stored in a persistent fashion in at least one server-side database of the engineering system,
- the objects are managed on the server side within a hierarchical object structure with a plurality of hierarchical levels, wherein the object structure comprises dependencies between objects,
- objects predefined by a user selection are loaded for a processing from the database into at least one processing memory area, wherein a respective access-authorized user is assigned to the objects and to the processing memory area,
- a first processing memory area, which is assigned as access-authorized user to a second processing memory area, is hierarchically of higher priority with respect to the second processing memory area,
- a first object in a processing memory area of higher priority, said first object having an identical object identifier to a second object in a processing memory area of lower priority, is a predecessor of the second object,
- upon initiation of a client-side user release of objects to be released that have been loaded into a selected processing memory area, a check is made to establish whether a processing memory area that is directly of higher priority is assigned to the selected processing memory area,
- the objects to be released that have been loaded into the selected processing memory area are written back to the server-side database in the event of a negative result of the check,
- for releasable objects that have been loaded into the selected processing memory area, in the event of a positive result of the check, direct predecessors of the releasable objects in the processing memory area of higher priority are determined, which have access-authorized users corresponding to those of the releasable objects,
- the determined predecessors are added to the releasable objects,
- among the releasable objects, the objects to be released are tagged for release in accordance with user input,
- among the releasable objects, objects subordinate to the objects to be released within the hierarchical object structure are determined and tagged for release,
- objects tagged for release are deleted from the user memory area of higher priority,
- the objects tagged for release, by means of a change of their assignment, are shifted from the selected user memory area into the user memory area of higher priority for a conclusion of the client-side user release,
when the control program runs in the computer.

## Revendications

1. Procédé pour faire fonctionner un système d'ingénierie d'un système d'automatisation d'opérations industrielles, dans lequel
- on représente des éléments du système d'automatisation d'opérations industrielles, respectivement, par un objet informatique au sein du système d'ingénierie et on les met en mémoire de manière persistante dans au moins une base (401) de données chez le serveur du système d'ingénierie,
- on gère les objets chez le serveur au sein d'une structure d'objet hiérarchique ayant plusieurs plans hiérarchiques, la structure d'objet comprenant des dépendances entre les objets,
- on charge des objets prescrits par une sélection d'utilisateur pour un traitement de la base (401) de données, dans au moins une partie (402, 403) de mémoire de traitement, un utilisateur, autorisé à l'accès, étant affecté aux objets et à la partie de mémoire de traitement,
- une première partie (402) de mémoire de traitement, qui, comme utilisateur utilisé à l'accès, est associée à une deuxième partie (403) de mémoire de traitement, est prioritaire hiérarchiquement par rapport à la deuxième partie (403) de mémoire de traitement,
- un premier objet (O₄, O₅, O₇) dans une partie (402) de mémoire de traitement prioritaire, qui a un identifiant d'objet identique à celui d'un deuxième objet (O₄", O₅', O₇') dans une partie (403) de mémoire de traitement non prioritaire, est précurseur du deuxième objet,
- lors du lancement d'une validation d'utilisateur de la part du client, on contrôle des objets à valider chargés dans une partie (403) de mémoire de traitement sélectionnée sur le point de savoir si à la partie (403) de mémoire de traitement sélectionnée est associée une partie (402) de mémoire de traitement directement prioritaire,
- on réécrit, dans la base (401) de données chez le serveur, les objets validés chargés dans la partie de mémoire de traitement sélectionnée, si le résultat du contrôle est négatif,
- on détermine (105-106), pour des objets pouvant être validés chargés dans la partie de mémoire de traitement sélectionnée, si le résultat du contrôle est positif, des précurseurs directs des objets pouvant être validés dans la partie de mémoire de traitement prioritaire, qui ont des utilisateurs à accès autorisé, qui coïncident, comme les objets pouvant être validés,
- on ajoute les précurseurs déterminés aux objets pouvant être validés,
- parmi les objets pouvant être validés, on caractérise (201), pour la validation, les objets à valider conformément à des entrées d'utilisateur,
- parmi les objets pouvant être validés, on détermine des objets subordonnés aux objets à valider au sein de la structure hiérarchique d'objet et on les caractérise (202-203) pour la validation,
- on efface (204) des objets caractérisés pour la validation de la partie de mémoire d'utilisateur prioritaire,
- on décale (205), pour une conclusion de la validation d'utilisateur de la part du client, les objets caractérisés pour la validation, en modifiant leur association de la partie de mémoire d'utilisateur sélectionnée à la partie de mémoire d'utilisateur prioritaire.

2. Procédé suivant la revendication 1,
dans lequel on ne charge en lecture et écriture pour un traitement de la base de données dans la au moins une partie de mémoire de traitement, que les objets prescrits par la sélection d'utilisateur et dans lequel des objets nouveaux peuvent être produits dans la partie de mémoire de traitement.

3. Procédé suivant l'une des revendications 1 ou 2,
dans lequel il est associé à la partie de mémoire de traitement, respectivement, une information de plan et dans lequel l'information de plan, associée à une partie de mémoire de traitement sélectionnée, se distingue, d'un palier, de l'information de plan associée à une partie de mémoire de traitement directement prioritaire.

4. Procédé suivant la revendication 3,
dans lequel un premier objet dans une partie de mémoire de traitement directement prioritaire, qui a un identifiant d'objet identique à celui d'un deuxième objet dans une partie de mémoire de traitement non prioritaire et un utilisateur à accès autorisé, qui coïncide, est un précurseur direct du deuxième objet.

5. Procédé suivant l'une des revendications 1 à 4,
dans lequel des utilisateurs à accès autorisé, associés à des objets et/ou à des parties de mémoire de traitement, sont des propriétaires de l'objet ou de la partie de mémoire de traitement.

6. Procédé suivant l'une des revendications 1 à 5,
dans lequel on représente, en superposition par rapport à des objets mémorisés dans la base de données sur une interface graphique d'utilisateur chez le client, des objets chargés dans une partie de mémoire de traitement.

7. Procédé suivant la revendication 6,
dans lequel on représente en superposition, par rapport à des objets chargés dans une partie de mémoire de traitement prioritaire sur l'interface graphique d'utilisateur chez le client, des objets chargés dans une partie de mémoire de traitement non prioritaire.

8. Procédé suivant l'une des revendications 6 ou 7,
dans lequel on rend disponible à un accès de la part du client, respectivement, chez le serveur, des parties de mémoire de traitement.

9. Procédé suivant l'une des revendications 1 à 8,
dans lequel on détermine de manière récursive, pour la partie de mémoire de traitement sélectionnée lors du lancement des validations d'utilisateur de la part du client, des parties de mémoire de traitement prioritaires.

10. Procédé suivant l'une des revendications 1 à 9,
dans lequel on détermine récursivement les précurseurs des objets pouvant être validés chargés dans la partie de mémoire de traitement sélectionnée.

11. Procédé suivant l'une des revendications 1 à 10,
dans lequel on détermine de manière récursive les objets subordonnés aux objets à valider au sein de la structure hiérarchique d'objet.

12. Procédé suivant l'une des revendications 9 à 11,
dans lequel on efface, de la partie de mémoire d'utilisateur prioritaire, les objets caractérisés pour la validation au moyen d'une opération de base de données unique et dans lequel on décale, de la partie de mémoire d'utilisateur sélectionnée à la partie de mémoire d'utilisateur prioritaire, les objets caractérisés pour la validation au moyen d'une opération de base de données unique.

13. Procédé suivant l'une des revendications 1 à 12,
dans lequel on remplace, conformément à la validation d'utilisateur de la part du client, dans des parties de mémoire d'utilisateur non prioritaires, des objets successeurs validés par une validation d'utilisateur de la part du client.

14. Programme de commande pour faire fonctionner un système d'ingénierie d'un système d'automatisation d'opérations industrielles, dans lequel le programme de commande peut être chargé dans une mémoire de travail d'un ordinateur et a au moins une partie de code à la réalisation de laquelle
- on représente des éléments du système d'automatisation d'opérations industrielles, respectivement, par un objet informatique au sein du système d'ingénierie et on les met en mémoire de manière persistante dans au moins une base de données chez le serveur du système d'ingénierie,
- on gère, par plusieurs plans hiérarchiques, les objets chez le serveur au sein d'une structure d'objet hiérarchique, la structure d'objet comprenant des dépendances entre les objets,
- on charge, pour un traitement de la base de données dans au moins une partie de mémoire de traitement, des objets prescrits par une sélection d'utilisateur, un utilisateur, autorisé à l'accès, étant affecté aux objets et à la partie de mémoire de traitement,
- une première partie de mémoire de traitement, qui, comme utilisateur utilisé à l'accès, est associée à une deuxième partie de mémoire de traitement, est prioritaire hiérarchiquement par rapport à la deuxième partie de mémoire de traitement,
- un premier objet dans une partie de mémoire de traitement prioritaire, qui a un identifiant d'objet identique à celui d'un deuxième objet dans une partie de mémoire de traitement non prioritaire, est précurseur du deuxième objet,
- lors du lancement d'une validation d'utilisateur de la part du client, on contrôle des objets à valider chargés dans une partie de mémoire de traitement sélectionnée sur le point de savoir si à la partie de mémoire de traitement sélectionnée est associée une partie de mémoire de traitement directement prioritaire,
- on réécrit, dans la base de données chez le serveur, les objets validés chargés dans la partie de mémoire de traitement sélectionnée, si le résultat du contrôle est négatif,
- on détermine, pour des objets pouvant être validés chargés dans la partie de mémoire de traitement sélectionnée, si le résultat du contrôle est positif, des précurseurs directs des objets pouvant être validés dans la partie de mémoire de traitement prioritaire, qui ont des utilisateurs à accès autorisé, qui coïncident, comme les objets pouvant être validés,
- on ajoute les précurseurs déterminés aux objets pouvant être validés,
- parmi les objets pouvant être validés, on caractérise, pour la validation, les objets à valider conformément à des entrées d'utilisateur,
- parmi les objets pouvant être validés, on détermine des objets subordonnés aux objets à valider au sein de la structure hiérarchique d'objet et on les caractérise pour la validation,
- on efface des objets caractérisés pour la validation de la partie de mémoire d'utilisateur prioritaire,
- on décale, pour une conclusion de la validation d'utilisateur de la part du client, les objets caractérisés pour la validation, en modifiant leur association de la partie de mémoire d'utilisateur sélectionnée à la partie de mémoire d'utilisateur prioritaire,
lorsque le programme de commande se déroule dans l'ordinateur.
